Europäisches Patentamt

European Patent Office

Office européen des brevets

(11) Publication number: **0 425 455 A2**

# (12) EUROPEAN PATENT APPLICATION

(21) Application number: 90830473.6

(22) Date of filing: 23.10.90

(51) Int. Cl.⁵: **B60H 1/00**, G05D 3/14

(30) Priority: 25.10.89 IT 6792289

(43) Date of publication of application:
**02.05.91 Bulletin 91/18**

(84) Designated Contracting States:
**DE ES FR GB SE**

(71) Applicant: **BORLETTI CLIMATIZZAZIONE S.r.l.**
**Frazione Masio, 24**
**I-10046 Poirino (Torino)(IT)**

(72) Inventor: **Franco, Stefano**
**Via Petrarca 17**
**I-10024 Moncalieri (Torino)(IT)**

(74) Representative: **Bosotti, Luciano et al**
**c/o Jacobacci-Casetta & Perani S.p.A. Via**
**Alfieri, 17**
**I-10121 Torino(IT)**

(54) **A control device for actuators, particularly electro-mechanical actuators for air-conditioning systems in motor-vehicles.**

(57) An integrable device for controlling actuators monitors the position of the actuator itself by voltage comparison (5, 6). Whenever the required position is not reached (due to the jamming of the motor or a mechanical stoppage), a timer element (7) intervenes to interrupt in any case the supply to the actuator motor within a predetermined period of time.

FIG. 1

EP 0 425 455 A2

# A DEVICE FOR CONTROLLING ACTUATORS, PARTICULARLY ELECTRO-MECHANICAL ACTUATORS FOR MOTOR-VEHICLE AIR-CONDITIONING SYSTEMS

The present invention relates in particular to devices for controlling electro-mechanical actuators and has been developed with particular attention to its possible application to electro-mechanical actuators which are used as an alternative to conventional mechanical controls, for example those using flexible (Bowden) cables, for operating the movable members (deflectors, partitioning members, etc.) of motor-vehicle air-conditioning systems.

The device according to the invention may also be used for any actuator which can operate a mechanical member (a headlamp adjuster, a rear-view mirror adjuster, a water-flow variator, etc...). It includes a main or control potentiometer for operation by the user and a monitoring potentiometer associated with the actuator for detecting the position reached by the latter and for providing a corresponding feedback signal. The device compares the voltages output by the control and monitoring potentiometers and, if they are different, activates the actuator motor in the sense needed to make the voltage generated by the monitoring potentiometer follow the voltage generated by the control potentiometer until the desired position has been reached. All this is achieved with a degree of accuracy determined by the amount of hysteresis incorporated in the comparator function.

Generally, when the actuator reaches one of the end positions of its permitted travel, the actuator potentiometer cannot reach the value of the control voltage; this ensures that, despite the tolerances, the end position, defined by mechanical abutment, is achieved in all circumstances.

Essentially, the object of the present invention is to improve such a control device to prevent the aforesaid mode of operation from resulting in damage to the device or to the actuator under load and, in particular, to the motor by preventing the supply to the motor from continuing after the actuator has reached the desired end position, with the risk of its burning out.

According to the present invention, this object is achieved by virtue of a device with the characteristics mentioned specifically in the claims which follow.

The invention will now be described, purely by way of non-limiting example, with reference to the appended drawings, in which:

Figure 1 shows the structure of an operating device according to the invention in block-diagrammatic form, and

Figure 2 is a possible embodiment of a circuit layout for a device according to the invention.

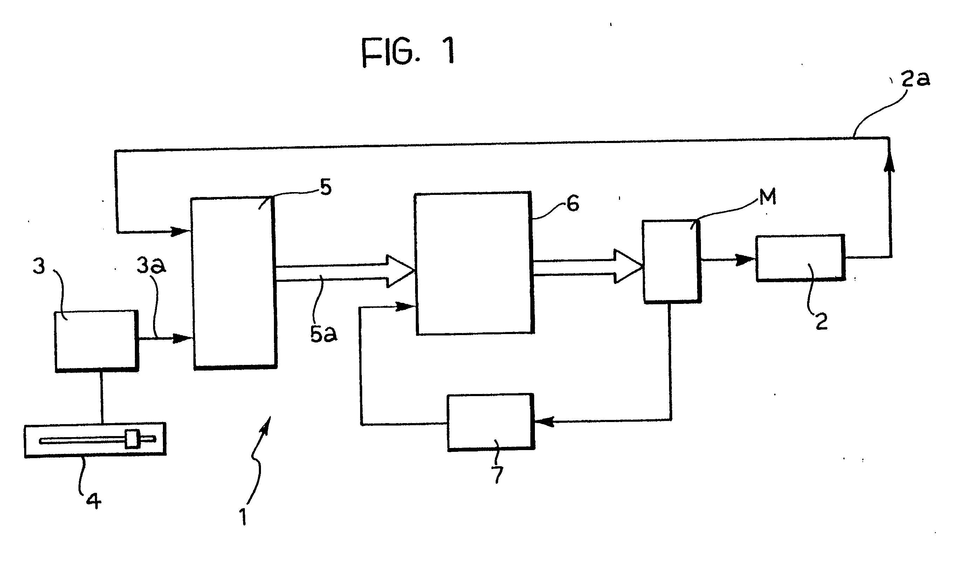

Figure 1 shows a device, generally indicated 1, for controlling an electromechanical actuator whose drive member is constituted by an electric motor M. By way of example, this may be one of the actuators for moving a deflector or a partitioning member in a motor-vehicle air-conditioning system.

A monitoring potentiometer 2 is made subservient to the motor M (for example, by being keyed directly to its shaft or by means of a mechanical transmission) and its function is to generate, at its output 2a, a feedback signal indicative of the angular position reached by the motor M and hence of the position reached by the member moved by the actuator.

Another potentiometer (the control potentiometer) is indicated 3 and is subservient to a control member 4, such as a rotary cursor or a slider which is moved by the user and is intended to supply, at its output 3a, a signal indicative of the position to be imparted to the actuator M and to the member moved thereby.

The signals at the outputs 2a, 3a of the two potentiometers 2, 3 are compared in a circuit 5 which has hysteresis and which supplies, at its output 5a, a signal indicative of the sense of the deviation of the position of the actuator and the movable member operated thereby from the required position selected on the potentiometer 3 by means of the control member 4.

The operating signal 5a is sent to a power circuit 6 which pilots the actuator (the motor M) so that it moves towards a position in which the level of the feedback signal on the line 2a is equal to the level of the control signal on the line 3a. when this condition of equality is reached (apart from tolerances which are taken into account by the provision of a certain amount of hysteresis in the comparison operation carried out by the circuit 5), the actuator M has reached the desired position.

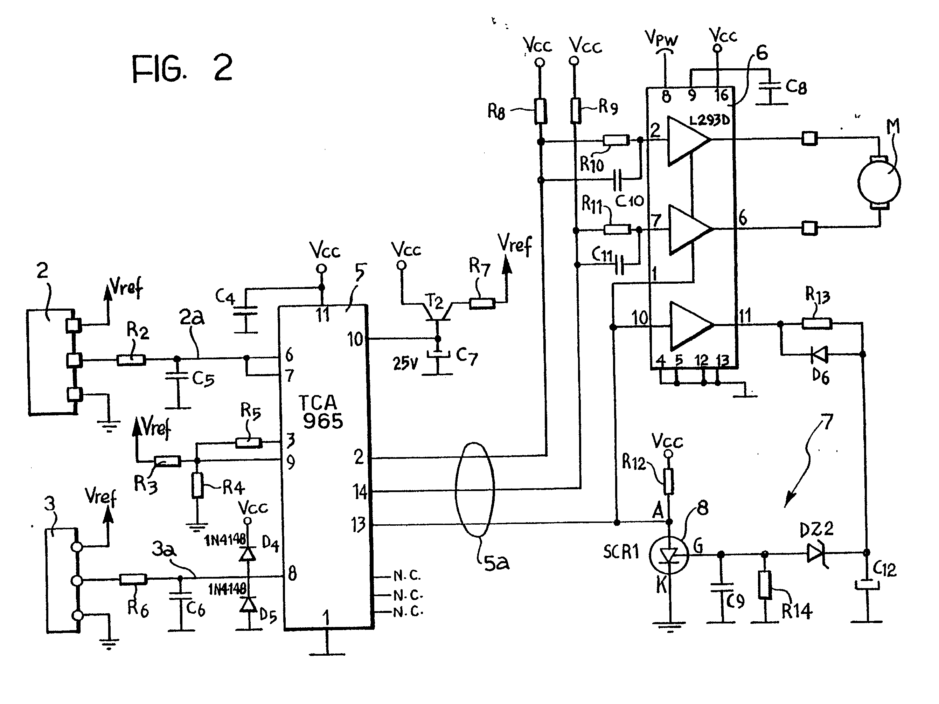

The electrical diagram of Figure 2 shows a possible embodiment of the function described above in which TCA 965 and L293D integrated circuits are used as the main elements, that is, as the logic section (comparator with hysteresis) 5 and as the power circuit 6 respectively.

The connections of the various active pins of the integrated circuits in question, as well as the various supply components, voltage stabilisers, etc., are also shown, but not the circuits which protect against load-dumping, polarity reversal, and excess voltages.

The values and characteristics of the components shown are given in the following table.

2

| Resistors (Ohms) | Capacitors | Transistors |
|---|---|---|
| R2 = 10k | | T2 = BC337 |
| R3 = 10k | | |
| R4 = 27 | C4 = 100nF | |
| R5 = 4.7k | C5 = 100nF | |
| R6 = 10k | C6 = 100nF | |
| R7 = 47 | C7 = 10$\mu$F | |
| R8 = 1k | C8 = 100nF | |
| R9 = 1k | | |
| R10 = 27k | C10 = 470nF | |
| R11 = 27k | C11 = 470nF | Diodes |
| | | D4 = $\overline{D5}$ = 1N4148 |

More particularly, the signal present at the output pin 13 of the TCA 965 integrated circuit assumes a "high" logic value when the circuit detects that there is a difference (or deviation) between the signals present on its input lines 2a, 3a and it assumes a "low" logic value when the deviation becomes zero (except for a tolerance margin given by the hysteresis of the circuit). The sign or sense of the deviation is expressed by different logic values assumed by the signals at the outputs 2 and 14 of the TCA 965 integrated circuit.

The signals in question (the outputs 13, 14 and 2 of the comparator circuit 5) are transferred to the power circuit 6 (to the inputs 1, 7 and 2 respectively of the L293D integrated circuit) and cause the motor M to rotate in the sense required to reach the desired position.

The main characteristic of the solution according to the invention lies in the fact that the deviation signal at the output 13 of the comparator circuit 5 is applied to the input 10 of the L293D integrated circuit (the power circuit 6 for piloting the motor M) in order to produce a signal at the pin 11 of the L293D integrated circuit which is used to charge an RC unit constituted by a resistor R13 (connected in parallel with a rapid-discharge diode D6) and a capacitor $C_{12}$. The RC unit in question is intended, by means of its intermediate point (that is, by the voltage to which the capacitor $C_{12}$ is charged), to pilot the gate electrode of an SCR diode 8 whose cathode is connected to earth and whose anode is connected to the line which leads to the pin 13 of the TCA 965 integrated circuit and to the pins 1 and 10 of the L293D integrated circuit. The anode of the SCR 8 is also connected to the supply voltage Vcc through a pull-up resistor R12 (10k ohms).

When the SCR diode 8 becomes conductive, it can connect the pins 1 and 10 of the power circuit 6 to earth so as to interrupt the supply to the motor M. It may also be noted that the intermediate point of the RC unit formed by the resistor $R_{13}$ and the capacitor $C_{12}$ is not connected to the gate of the SCR 8 directly but through a Zener diode DZ2 associated with a polarisation resistor $R_{14}$ (2.7k ohms) and a capacitor C9 (100nF) which acts as a filter. The function of the Zener diode DZ2 is essentially to raise (to about 5 volts) the voltage to which the capacitor $C_{12}$ must be charged in order to make the SCR diode 8 conductive.

When the power circuit 6 is supplied (a "high" level signal transmitted by the pin 13 of the TCA 965 integrated circuit) in order to position the actuator, the RC circuit ($R_{13}$, $C_{12}$) is supplied by the L293D integrated circuit (pin 11) and the capacitor $C_{12}$ is charged.

The time constant of the RC circuit in question (for example 12 seconds) is selected so that the time needed for the capacitor $C_{12}$ to reach the level of charge (for example, 5 volts) required to make the SCR diode 8 conductive is slightly longer than the time needed for the actuator M to travel its maximum permitted distance (for example, to move from one abutment to the other). This means that, during movements between intermediate positions, the SCR diode 8 never becomes conductive. Thus, when the deviation signal 10 (pin 13 of the TCA 965 integrated circuit) becomes zero because the desired position has been reached, the capacitor $C_{12}$ will be discharged rapidly through the diode D6 (resetting the circuit).

On the other hand, when (for example, as a result of an abutment with one of the end stops) the deviation signal remains at a high logic level for a period of time such that the capacitor $C_{12}$ becomes charged to the voltage (for example 5 V) which suffices to polarise the SCR diode 8 directly, as the SCR diode 8 becomes conductive it forces the pin 1 of the power circuit 6 connected to its anode to a low level, interrupting the supply to the motor M.

As a result of the feedback through the pins 10 and 11 of the L293D integrated circuit, the capacitor $C_{12}$ will then start to discharge.

The SCR 8 will still remain conductive, however, because of the current flowing between its anode and

3

its cathode, keeping the motor M switched off. The SCR diode 8 will stop conducting only when the deviation signal output by the TCA 965 integrated circuit at its pin 13 automatically falls to zero because the difference between the voltages present on the input lines 2a and 3a has been annulled.

The mode of operation described above ensures that, in every possible operating condition (including any obstruction of the member moved by the actuator), the motor M is supplied, at most, for a period determined by the time constant of the RC circuit ($R_{13}$, $C_{12}$).

A further important characteristic of the control device according to the invention lies in the fact that the set of components which constitute it can be incorporated in a very small circuit which can be integrated with the actuator, that is, in practice it can be mounted on the housing of the motor M, or even inside it.

## Claims

1. A device for controlling actuators, characterised by:
- first potentiometric means (3) for generating a control signal (3a) indicative of the position to be imparted to the actuator (M),
- second potentiometric means (2) to be connected to the actuator (M) for generating a monitoring signal (2a) indicative of the position assumed by the actuator (M) during its travel, which may continue for a given maximum period,
- comparator means (5, 6) connected (2a, 3a) to the first (2) and second (3) potentiometric means for generating a deviation signal (5a) indicative of the difference between the monitoring signal (2a) and the control signal (3a) and for transferring the deviation signal (5a) to the actuator (M) so as to activate the actuator (M) in order to bring the actuator (M) to a position coincident with the position to be imparted thereto, and
- timer means (7) and feedback means (8) connected to the comparator means (5, 6) and able, in all circumstances, to switch off the actuator (M) within a period of time no shorter than the given maximum period.
2. A device according to Claim 1, characterised in that the timer and feedback means comprise an RC unit ($R_{13}$, $C_{12}$), a timer or an integrated oscillator activated by the activation of the actuator (M) and a member (8) for switching off the actuator (M), the member (8) being operated by the timer means.
3. A device according to Claim 1 or Claim 2, characterised in that the feedback timer means (7) include at least one SCR diode (8) which can be made conductive in order to de-activate the comparator means (6).
4. A device according to any one of Claims 1 to 3, characterised in that the comparator means comprise a comparator circuit (5) and a power circuit (6) and in that the feedback means (7, 8) act mainly on the power circuit (6).
5. A device according to Claim 1 or Claim 4, characterised in that the comparator means act with hysteresis.
6. A device according to any one of the preceding claims, characterised in that the comparator means (6) include an L293D integrated circuit for controlling the actuator (M) and in that the feedback means (7) are connected to the integrated circuit (6) preferably in a configuration such as to take the signal from the pin 11 and to feed it back to at least one of the pins 1 and 10 of the integrated circuit (6) itself.
7. A device according to any one of the preceding claims, produced in the form of a circuit which can be integrated with the actuator (M).
8. A device according to Claim 7, associated with the actuator (M) and mounted in a position on or within the housing of the actuator (M).

FIG. 1

EP 0 425 455 A2

FIG. 2